# FASCICULE DE BREVET EUROPEEN

(11) **EP 1 725 438 B1**
(45) Date de publication et mention de la délivrance du brevet: **19.09.2007**
(21) Numéro de dépôt: 05742642.1
(22) Date de dépôt: 18.03.2005
(51) Int. Cl.: B60S 1/52

(54) **MOYENS DE FIXATION, SUR UNE PIÈCE DE CARROSSERIE, D'UNE TRAPPE OBTURATRICE D'UNE OUVERTURE MÉNAGÉE DANS LADITE PIÈCE DE CARROSSERIE POUR LA SAILLIE D'UN ORGANE MOBILE AINSI QU'UN ENSEMBLE D'UNE TRAPPE OBTURATRICE ET DE TELS MOYENS DE FIXATION**
MITTEL ZUR BEFESTIGUNG EINER ABDECKKLAPPE AN EINEM KAROSSERIETEIL, WOBEI DIE KLAPPE ZUR ABDECKUNG EINES LOCHS IM KAROSSERIETEIL, VON DEM EIN BEWEGLICHES ELEMENT VORRAGT, VERWENDET WIRD, UND EINE ABDECKKLAPPE UND SOLCHE BEFESTIGUNGSMITTEL UMFASSENDE ANORDNUNG
MEANS FOR FIXING A COVER FLAP TO A BODYWORK PART, IN WHICH THE FLAP IS USED TO COVER A HOLE IN THE BODYWORK PART FROM WHICH A MOBILE ELEMENT PROJECTS, AND ASSEMBLY COMPRISING A COVER FLAP AND SUCH FIXING MEANS

(30) Priorité: 18.03.2004 FR 0402828
(43) Date de publication de la demande: 29.11.2006
(73) Titulaire: COMPAGNIE PLASTIC OMNIUM, 69007 Lyon (FR)
(72) Inventeur: BOURENNANE, Faicel, F-01500 Ambérieu en Bugey (FR)
(74) Mandataire: Remy, Vincent Noel Paul
(86) Numéro de dépôt international: PCT/FR2005/000669
(87) Numéro de publication internationale: WO 2005/097571

(56) Documents cités:
- EP-A- 1 125 808
- WO-A-01/12482

## Description

La présente invention concerne des moyens de fixation, sur une pièce de carrosserie, d'une trappe obturatrice d'une ouverture ménagée dans ladite pièce de carrosserie pour la saillie d'un organe mobile, un ensemble d'une trappe obturatrice et de tels moyens de fixation, ainsi qu'un ensemble d'une pièce de carrosserie, d'une trappe obturatrice, d'un gicleur de lave-phare et de moyens de fixation de la trappe.

On connaît les lave-phare, qui sont des organes montés à proximité des optiques d'un véhicule pour asperger leur vitrage avec de l'eau ou un mélange nettoyant.

Pour des raisons esthétiques et pour le protéger des salissures, le lave-phare est souvent logé derrière la peau de pare-chocs et est monté mobile entre deux positions, l'une dite de repos dans laquelle le lave-phare se trouve en retrait de la peau de pare-chocs, l'autre dite d'utilisation dans laquelle le lave-phare fait saillie de la peau de pare-chocs à travers une ouverture ménagée dans ce dernier, le gicleur du lave-phare étant dirigé vers le vitrage de l'optique.

Dans cette hypothèse, la présence du lave-phare exige que soit ménagée une ouverture sur la peau du pare-chocs, ainsi qu'un mécanisme de trappe mobile pour obturer cette ouverture lorsque le lave-phare est au repos et pour la libérer lorsque le lave-phare est en position d'utilisation.

Ainsi, la trappe d'obturation est munie de moyens d'assemblage avec l'organe mobile que constitue le lave-phare, moyens d'assemblage grâce auxquels la trappe peut se déplacer solidairement avec l'organe mobile entre une position fermée dans laquelle elle obture l'ouverture, tandis que l'organe mobile est en retrait de l'ouverture, et une position ouverte dans laquelle elle libère l'ouverture, tandis que l'organe mobile fait saillie de cette ouverture.

Une example de l'art antérieur est divulgé par EP 1 125 808.

Mais comme les lave-phare sont de nos jours des équipements optionnels, ou réservés en série aux véhicules haut de gamme, il a déjà été imaginé, pour un modèle de véhicule (modèle Astra (marque déposée) du constructeur Opel (marque déposée) commercialisé en 2004), une solution dans laquelle une même peau de pare-chocs peut être utilisée indifféremment avec ou sans lave-phare. Cette solution présente l'avantage qu'elle évite la gestion de deux catégories de peaux de pare-chocs : celles pourvues d'une ouverture en vue de l'installation d'un lave-phare et celles dépourvues d'une telle ouverture.

Dans cette solution, la peau de pare-chocs comporte toujours une ouverture fermée par une trappe, mais en cas d'absence de lave-phare sur le véhicule, la trappe vient s'encliqueter directement sur la pièce de carrosserie grâce à des pattes d'encliquetage.

Le résultat est satisfaisant en ce qui concerne la fabrication des peau de pare-chocs mais peut encore être amélioré d'un point de vue industriel du fait que la présence des pattes d'encliquetage sur la trappe gêne les mouvements de l'organe mobile. Il faut donc reprendre chaque trappe devant équiper un véhicule muni d'un lave-phare, pour en éliminer les pattes d'encliquetage et permettre la fixation de l'organe mobile sur la trappe.

La présente invention vise à remédier à cet inconvénient.

La présente invention a donc pour objet des moyens de fixation, sur une pièce de carrosserie, d'une trappe obturatrice d'une ouverture ménagée dans ladite pièce de carrosserie pour la saillie d'un organe mobile constitué par un gicleur de lave-phare, la trappe d'obturation étant munie de moyens d'assemblage avec l'organe mobile, moyens d'assemblage grâce auxquels la trappe se déplace solidairement avec l'organe mobile entre une position fermée dans laquelle elle obture l'ouverture tandis que l'organe mobile est en retrait de l'ouverture et une position ouverte dans laquelle elle libère l'ouverture, tandis que l'organe mobile fait saillie de cette ouverture. Ces moyens de fixation sont caractérisés en ce qu'ils comportent des moyens d'assemblage aptes à coopérer avec les moyens d'assemblage de la trappe pour solidariser la trappe auxdits moyens de fixation, ainsi que des moyens d'accrochage sur la pièce de carrosserie pour solidariser lesdits moyens de fixation à la pièce de carrosserie, les moyens de fixation maintenant la trappe sur la pièce de carrosserie en cas d'absence de l'organe mobile.

Grâce à l'invention, il n'est plus nécessaire d'effectuer une opération de reprise de la trappe selon que le véhicule sur lequel elle doit être utilisée est ou non muni de lave-phare, étant donné que les moyens d'assemblage prévus sur ladite trappe peuvent servir aussi bien à la fixer sur l'organe mobile, c'est-à-dire en particulier le lave-phare, que sur les moyens de fixations qui la maintiennent sur la peau en cas d'absence d'un tel organe mobile.

Selon des modes de réalisation particuliers de l'invention, qui peuvent être pris seuls ou en combinaison, l'invention peut présenter l'une ou plusieurs des caractéristiques suivantes :
- Les moyens de fixation sont constitués par un tirant, comportant les moyens d'assemblage pour se solidariser à la trappe, et par un support, comportant les moyens d'accrochage pour se solidariser à la pièce de carrosserie, le tirant et le support comportant des moyens de couplage agencés de manière que le tirant transmette au support les efforts nécessaires au maintien de la trappe en position fermée. Le découpage des moyens de fixation en deux pièces facilite le montage desdits moyens de fixation entre la trappe et la pièce de carrosserie. En particulier, comme cela va être expliqué, ce découpage facilite la prise en sandwich de la pièce de carrosserie entre les moyens de fixation et la trappe, ainsi que la génération d'une force de plaquage qui applique la trappe dans le logement qui lui est réservé sur la pièce de carrosserie, de sorte que d'éventuels jeux pouvant apparaître ultérieurement à la première mise en place de la trappe sont automatiquement compensés.
- La trappe est conformée pour prendre appui sur une face externe de la pièce de carrosserie lorsqu'elle est en position fermée et les moyens de fixation prennent appui sur une face de la pièce de carrosserie opposée à sa face externe. Ainsi est réalisée la prise en sandwich de la pièce de carrosserie, de sorte que la force de réaction nécessaire à l'application d'une force de plaquage est directement transmise à la surface par laquelle les moyens de fixation s'appuient sur la pièce de carrosserie.
- Les moyens de fixation sont dimensionnés de manière à exercer sur la trappe une force de plaquage contre la face externe de la pièce de carrosserie.
- Les moyens de fixation présentent une élasticité dans une direction sensiblement normale à la pièce de carrosserie au voisinage de l'ouverture, dans une mesure correspondant à des jeux pouvant résulter de dilatations des moyens de fixation et éventuellement de la trappe et/ou de la pièce de carrosserie et/ou à des fluages de ces éléments.
- L'élasticité des moyens de fixation est procurée par une partie élastiquement déformable du support.
- La partie élastiquement déformable du support supporte les moyens de couplage avec le tirant.
- Les moyens de couplage comprennent une liaison rotule qui permet au tirant de maintenir la trappe dans l'ouverture sans lui imposer d'orientation.
- La liaison rotule est constituée par une partie sphérique sur le tirant et par un siège tronconique sur le support.
- Le support et le tirant comportent une forme de guidage qui permet leur accouplement.
- La forme de guidage comprend une rampe d'engagement dont l'inclinaison est telle que, lors de l'accouplement, le tirant se rapproche du support, ce qui engendre la force de plaquage de la trappe sur la face externe de la pièce de carrosserie.
- La forme de guidage comprend des butées anti-retour s'opposant au désaccouplement du tirant d'avec le support.
- Le tirant comporte des portées agencées à la fois pour glisser sur la rampe d'engagement et pour passer en force les butées anti-retour.
- La trappe est dimensionnée pour pouvoir venir se loger dans l'épaisseur de la pièce de carrosserie lorsqu'elle en obture l'ouverture.
- Les moyens d'assemblage de la trappe à l'organe mobile et aux moyens de fixation comprennent des nervures de fixation aptes à coopérer avec des tétons formés sur l'organe mobile et avec des tétons formés sur les moyens de fixation.

La présente invention a également pour objet un ensemble d'une trappe et de moyens de fixation de cette trappe, tels que décrits ci-dessus.

Selon l'invention, la pièce de carrosserie peut être en particulier une peau de pare-chocs.

L'invention a également pour objet un ensemble d'une pièce de carrosserie, d'un organe mobile constitué par un gicleur de lave-phare, d'une trappe obturatrice d'une ouverture ménagée dans ladite pièce de carrosserie pour la saillie du gicleur de lave-phare, et de moyens de fixation, sur la pièce de carrosserie, de la trappe, ensemble dans lequel la trappe obturatrice est munie de moyens d'assemblage avec le gicleur, moyens d'assemblage grâce auxquels la trappe se déplace solidairement avec le gicleur entre une position fermée dans laquelle elle obture l'ouverture tandis que le gicleur est en retrait de l'ouverture et une position ouverte dans laquelle elle libère l'ouverture, tandis le gicleur fait saillie de cette ouverture, cet ensemble étant caractérisé en ce que les moyens de fixation comportent des moyens d'assemblage aptes à coopérer avec les moyens d'assemblage de la trappe pour solidariser la trappe auxdits moyens de fixation, ainsi que des moyens d'accrochage sur la pièce de carrosserie pour solidariser lesdits moyens de fixation à la pièce de carrosserie, les moyens de fixation maintenant la trappe sur la pièce de carrosserie en cas d'absence du gicleur.

Afin de mieux faire comprendre l'invention, on va en décrire maintenant un mode de réalisation donné à titre d'exemple non limitatif, en référence aux dessins annexés dans lesquels :
- la figure 1 est une vue en perspective de trois quart d'une extrémité avant gauche d'un véhicule automobile, comportant un bouclier et une trappe obturatrice,
- la figure 2 est un agrandissement de l'avant du bouclier de la figure 1 dans sa partie II,
- la figure 3 est une vue de l'arrière de la même partie II du bouclier,
- la figure 4 est une vue en perspective du dessous de la trappe obturatrice de la figure 1,
- la figure 5 est une vue en perspective d'un gicleur de lave-phare en position sortie,
- la figure 6 est une vue en perspective d'un support appartenant aux moyens de fixation de la trappe,
- la figure 7 est une vue en perspective d'un tirant appartenant aux moyens de fixation de la trappe,
- la figure 8 est une vue analogue à la figure 3 montrant le support en place sur la pièce de carrosserie et le tirant en place sur la trappe, le tirant et le support n'étant pas accouplés et,
- la figure 9 est une vue analogue à la figure 8, montrant, en coupe partielle, le tirant et le support accouplés.

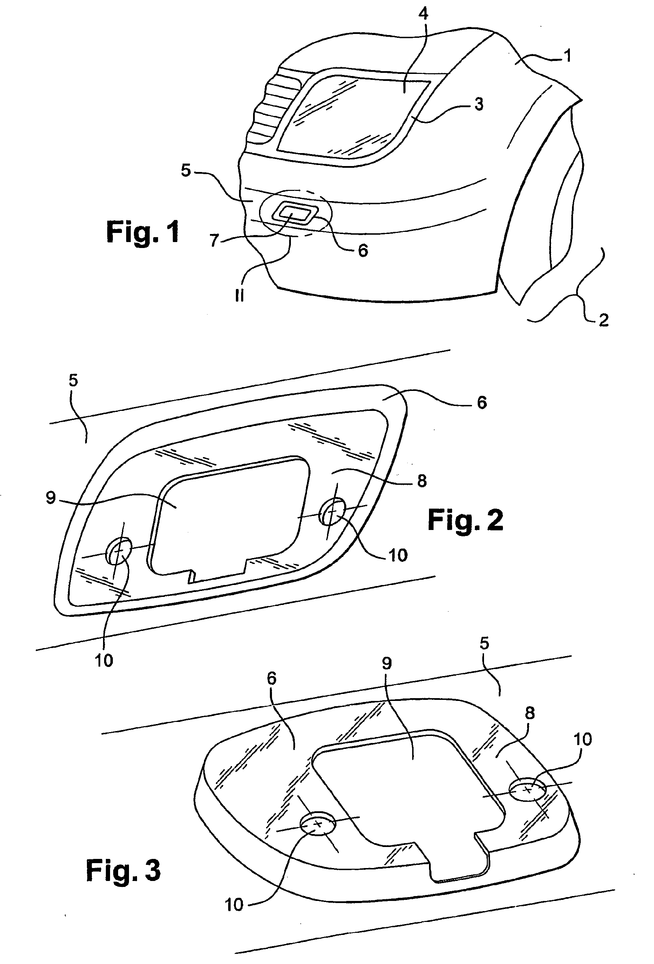

Sur la figure 1, on a représenté une peau de pare-chocs 1 qui comporte, à proximité de sa crosse 2, un décrochement 3 pour un bloc optique 4.

La peau de pare-chocs 1 comporte un rebord supérieur 5 sensiblement horizontal, à l'intérieur duquel est ménagée une ouverture 6 située à la base du bloc optique.

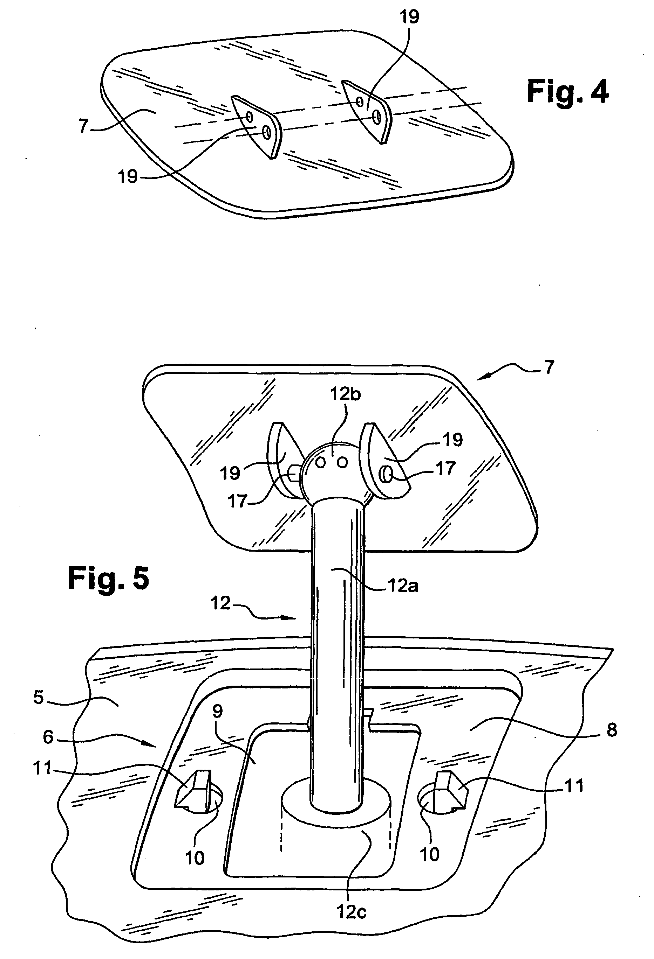

Cette ouverture 6 permet à un lave-phare (non représenté sur la figure 1 mais dont le gicleur 12 est visible sur la figure 5) de faire saillie au-dessus du rebord 5 pour projeter un liquide nettoyant sur le vitrage du bloc optique 4.

Sur la figure 1, l'ouverture 6 est obturée par une trappe 7 de forme correspondante.

Sur la vue rapprochée de la figure 2, on voit mieux le détail de l'intérieur de l'ouverture 6.

Cette ouverture est conformée en cuvette avec un fond 8 au milieu duquel est prévu un passage traversant sensiblement rectangulaire 9 qui est dimensionné pour permettre la traversée du gicleur de lave-phare (non représenté).

De part et d'autre de l'ouverture 9, deux orifices 10, désignés trous de clippage, permettent l'encliquetage du corps 12c du gicleur, qui comporte à cet effet deux pattes d'encliquetage 11, comme on le voit sur la figure 5.

Des nervures de centrage et des épaulements (non représentés) sont formés dans l'épaisseur de l'ouverture pour assurer le centrage de la trappe 7 et le réglage de son affleurement avec le rebord 5 de la peau de pare-chocs.

La trappe 7, qui est représentée notamment sur la figure 4, présente une épaisseur telle que son appui sur les épaulements de l'ouverture 6 positionne la trappe à l'affleurement du rebord 5.

Dans la position de la trappe représentée à la figure 1, désignée position fermée, deux hypothèses sont possibles. Soit le véhicule ne comporte pas de lave-phare et la trappe est fixée à demeure dans cette position fermée, soit le véhicule comporte un lave-phare et la trappe prend cette position fermée lorsque le lave-phare est au repos, en retrait de la peau de pare-chocs.

Comme on le voit sur la figure 5, la trappe est solidarisée au lave-phare grâce à des moyens d'assemblage comprenant deux nervures de fixation 19 aptes à coopérer avec des tétons 17 formés sur la tête du gicleur 12. La trappe 7 s'applique sur les épaulements lorsque la tête du gicleur est rentrée en position de repos, ce qui donne à la peau de pare-chocs l'apparence représentée à la figure 1.

En position d'utilisation de la tête de gicleur, comme on le voit à la figure 5, la trappe est soulevée au-dessus de l'ouverture 6 et la tête de gicleur 12b peut projeter un liquide nettoyant sur le vitrage du bloc optique 4.

On va maintenant décrire les moyens de fixation de la trappe sur la peau de pare-chocs lorsque le véhicule ne comporte pas de lave-phare.

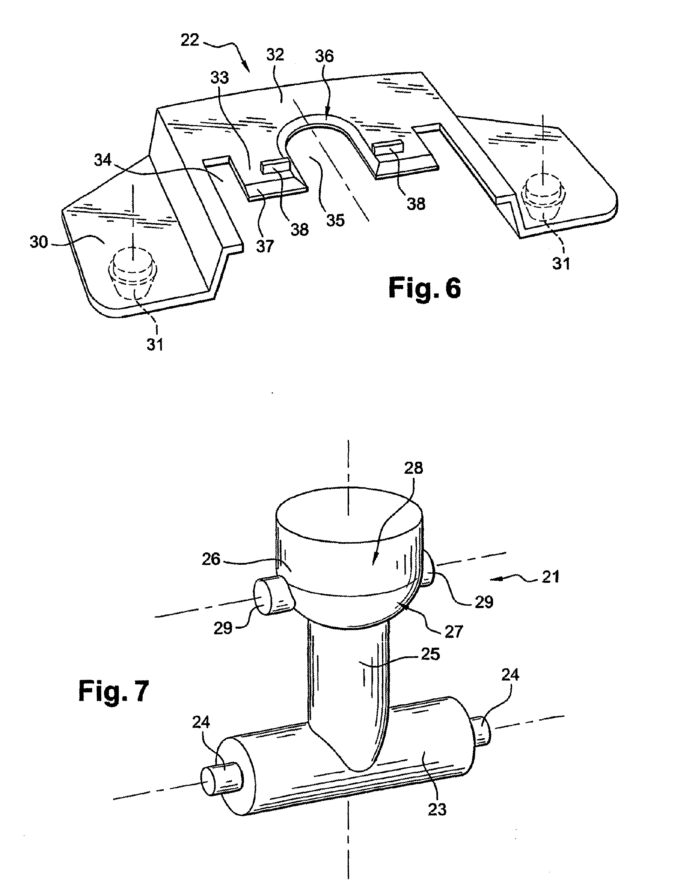

Ces moyens comprennent d'une part un tirant 21 représenté sur la figure 7, et un support 22, représenté sur la figure 6.

Le tirant se décompose en une tête 23, dont la forme cylindrique porte à chacune de ses extrémités deux tétons 24 qui sont comparables, tant dans leur forme que de leur positionnement relatif, aux deux tétons 17 de la tête 12b de gicleur 12.

La tête 23 est portée par un tronc 25 qui s'étend perpendiculairement à la tête 23, jusqu'à une base 26.

La base 26 est elle-même divisée en une partie sphérique 27, qui prend naissance à la jonction entre le tronc 25 et la base 26, et une zone de préhension cylindrique 28. En outre, la partie sphérique 27 est munie de portées latérales 29, sous la forme de portions de cylindres parallèles à la tête 23, dont la fonction sera décrite ultérieurement.

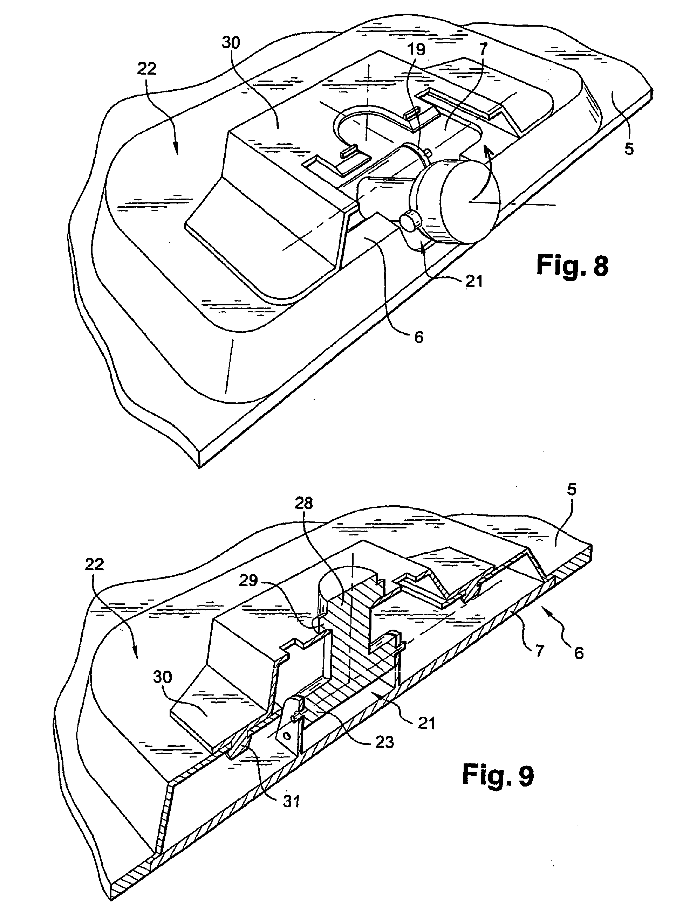

Comme on le voit clairement sur les figures 8 et 9, le tirant 21 est destiné à se fixer sur la trappe 7 grâce aux tétons 24 qui constituent des moyens d'assemblage aptes à coopérer avec les moyens d'assemblage de la trappe, constitués par les nervures de fixation 19.

Ainsi, la liaison entre le tirant et la trappe forme un pivot dont l'axe est confondu avec l'axe des deux tétons 24. De plus, en laissant un jeu axial entre la tête 23 et les deux nervures 19, on offre un deuxième degré de liberté à la trappe par rapport au tirant.

Le support 22, représenté notamment sur la figure 6, comprend un socle 30 muni de deux clips de positionnement 31 aptes à s'encliqueter dans les trous de clippage 10 de la pièce de carrosserie 5 (voir figure 2). Ainsi, le support 22 peut se fixer sur la pièce de carrosserie en utilisant les mêmes moyens d'assemblage que le corps du gicleur.

Comme cela apparaîtra à la lumière de la description qui va suivre, ces clips 31 ne supportent pas d'efforts liés au maintien de la trappe car ces efforts sont transmis directement par appui du socle sur la pièce de carrosserie. En d'autres termes, le socle constitue un moyen d'accrochage du support 22 sur la pièce de carrosserie.

Le socle est conformé en pont avec une partie centrale échancrée 32.

L'échancrure formée dans cette partie 32 délimite, d'une part, une zone de flexion 33 qui est libérée du socle grâce à une découpe latérale 34. La zone de flexion 33 comporte elle-même une découpe en U 35, délimitée par un bord conique 36 formant un siège pour la partie sphérique 27 du tirant.

L'ensemble constitué par ce siège 36 et la partie sphérique 27 du tirant constitue un moyen de couplage en rotule permettant l'accouplement du tirant avec le support.

Le bord libre de la zone de flexion 33 est chanfreiné pour constituer une rampe d'engagement 37 sur laquelle peuvent glisser les deux portées 29 du tirant, comme cela va être expliqué.

En outre, des nervures 38 formant des butées anti-retour sont ménagées à proximité de cette rampe d'engagement 37, dans une position telle qu'une fois l'accouplement réalisé, les portées 29 ont franchi en force les butées anti-retour 38.

On comprend, en observant les figures 8 et 9, comment cet accouplement se produit.

Le tirant étant assemblé à la trappe et le support étant assemblé à la pièce de carrosserie, on présente la trappe dans l'ouverture et la zone de préhension du tirant traverse l'ouverture et sort du côté de la face intérieure de la pièce de carrosserie, dans le passage laissé libre entre la partie centrale 32 du socle et une échancrure 40 ménagée à cet effet dans la pièce de carrosserie.

Une fois dans cette position, représentée sur les figures 7 et 8, le tirant, qui peut pivoter par rapport à la trappe, peut venir par rotation s'accoupler avec le support.

Lors de cet accouplement, les portées 29 commencent par glisser sur les rampes d'engagement 37.

Ce glissement provoque une légère flexion de la zone de flexion 33, ce qui met le tirant en traction et plaque la trappe contre la pièce de carrosserie, ou plus précisément contre les épaulements 14 ménagés dans la pièce de carrosserie pour un positionnement précis de la trappe.

Les portées 29 franchissent ensuite en force les butées anti-retour 38 et la partie sphérique du tirant vient se loger sur le siège conique 36 du support, assurant ainsi un couplage par liaison rotule entre le tirant et le support.

De cette façon, la trappe se trouve positionnée dans l'ouverture en étant mise en traction par le tirant, couplé au support.

On voit que, grâce à l'invention, la trappe est maintenue dans son emplacement par les moyens de fixation que constituent le tirant 21 et le support 22 sans qu'il ne soit nécessaire de prévoir sur celle-ci des moyens supplémentaires pour la solidariser à un lave-phare.

Ainsi, que le véhicule soit ou non muni d'un phare, aucune reprise de la trappe n'est nécessaire.

Il est bien entendu que le mode de réalisation qui vient d'être décrit ne présente aucun caractère limitatif et qu'il pourra recevoir toute modification désirable sans sortir pour cela du cadre de l'invention.

## Revendications

1. Ensemble d'une trappe (7) et de moyens de fixation de cette trappe sur une pièce de carrosserie, la trappe (7) étant obturatrice d'une ouverture (6) ménagée dans ladite pièce de carrosserie (5) pour la saillie d'un organe mobile constitué par un gicleur (12) de lave-phare, la trappe obturatrice étant munie de moyens d'assemblage (19) avec l'organe mobile, moyens d'assemblage grâce auxquels la trappe peut se déplacer solidairement avec l'organe mobile entre une position fermée dans laquelle elle obture l'ouverture (6) tandis que l'organe mobile (12) est en retrait de l'ouverture et une position ouverte dans laquelle elle libère l'ouverture (6), tandis que l'organe mobile fait saillie de cette ouverture, ensemble **caractérisé en ce que** les moyens de fixation (21, 22) comportent des moyens d'assemblage (24) aptes à coopérer avec les moyens d'assemblage (19) de la trappe (7) pour solidariser la trappe (7) auxdits moyens de fixation (21, 22), ainsi que des moyens d'accrochage (30) sur la pièce de carrosserie pour solidariser lesdits moyens de fixation (21, 22) à la pièce de carrosserie (7), les moyens de fixation (21, 22) étant aptes à maintenir la trappe (7) sur la pièce de carrosserie en cas d'absence de l'organe mobile (12).

2. Ensemble selon la revendication 1, constitués par un tirant (21), comportant les moyens d'assemblage (24) pour se solidariser à la trappe (7), et par un support (22), comportant les moyens d'accrochage (30) pour se solidariser à la pièce de carrosserie (5), le tirant et le support comportant des moyens de couplage (27, 36) agencés de manière que le tirant transmette au support les efforts nécessaires au maintien de la trappe en position fermée.

3. Ensemble selon l'une quelconque des revendications 1 et 2, dans lequel, la trappe (7) étant conformée pour prendre appui sur une face externe de la pièce de carrosserie (5) lorsqu'elle est en position fermée, les moyens de fixation (21, 22) prennent appui sur une face de la pièce de carrosserie (5) opposée à sa face externe.

4. Ensemble selon l'une quelconque des revendications 1 à 3, dans lequel les moyens de fixation sont dimensionnés de manière à exercer sur la trappe (7) un force de plaquage contre la face externe de la pièce de carrosserie (6).

5. Ensemble selon l'une quelconque des revendications 1 à 4, dans lequel les moyens de fixation présentent une élasticité dans une direction sensiblement normale à la pièce de carrosserie (5) au voisinage de l'ouverture (6), dans une mesure correspondant à des jeux pouvant résulter de dilatations des moyens de fixation (21, 22) et éventuellement de la trappe (7) et/ou de la pièce de carrosserie (5) et/ou à des fluages de ces éléments.

6. Ensemble selon la revendication 2 prise en combinaison avec l'une quelconque des revendications 1 à 5, dans lequel les moyens de fixation présentent une élasticité procurée par une partie élastiquement déformable du support (22).

7. Ensemble selon la revendication 6, dans lequel la partie élastiquement déformable du support (22) supporte les moyens de couplage (36) avec le tirant (21).

8. Ensemble selon l'une quelconque des revendications 1 à 7, dans lequel les moyens de fixation comprennent une liaison rotule (27, 36) qui permet au tirant (21) de maintenir la trappe (7) dans l'ouverture (6) sans lui imposer d'orientation.

9. Ensemble selon la revendication 8, dans lequel la liaison rotule est constituée par une partie sphérique (27) sur le tirant (21) et par un siège tronconique (36) sur le support (22).

10. Ensemble selon la revendication 2 prise en combinaison avec l'une quelconque des revendications 1 à 9, dans lequel le support (22) et le tirant (21) comportent une forme de guidage qui permet leur accouplement.

11. Ensemble selon la revendication 10, dans lequel la forme de guidage comprend une rampe d'engagement (37) dont l'inclinaison est telle que, lors de l'accouplement, le tirant (21) se rapproche du support (22), ce qui engendre la force de plaquage de la trappe (7) sur la face externe de la pièce de carrosserie.

12. Ensemble selon l'une quelconque des revendications 10 et 11, dans lequel la forme de guidage comprend des butées anti-retour (38) s'opposant au désaccouplement du tirant d'avec le support.

13. Ensemble selon la revendication 12, dans lequel le tirant (21) comporte des portées (29) agencées à la fois pour glisser sur la rampe d'engagement (37) et pour passer en force les butées anti-retour (38).

14. Ensemble selon l'une quelconque des revendications 1 à 13, dans lequel les moyens d'assemblage de la trappe à l'organe mobile et aux moyens de fixation comprennent des nervures de fixation (19) aptes à coopérer avec des tétons (17) formés sur l'organe mobile et avec des tétons (24) formés sur les moyens de fixation.

15. Ensemble d'une pièce de carrosserie, d'un organe mobile constitué par un gicleur (12) de lave-phare, et d'un ensemble d'une trappe (7) et de moyens (21, 22) de fixation de cette trappe sur la pièce de carrosserie selon l'une quelconque des revendications 1 à 14.

## Claims

1. Assembly of a closure hatch (7) and fastener means for fastening the hatch (7) to a bodywork part for the purpose of closing an opening (6) which is provided in said bodywork part (5) and from which a moving member constituted by a headlight washer nozzle (12) can be caused to project, the closure hatch being provided with assembly means (19) which serve to assemble it to the moving member, thereby constraining the hatch to move with the moving member between a closed position in which said hatch closes the opening (6) while the moving member (12) is retracted inside the opening, and an open position in which it uncovers the opening (6) while the moving member is projecting from said opening, the assembly being **characterized in that** said fastener means (21, 22) include assembly means (24) suitable for co-operating with the assembly means (19) of the hatch (7) for the purpose of securing the hatch to said fastener means (21, 22), and securing means (30) for securing said fastener means (21, 22) to the bodywork part, the fastener means (21, 22) being able to hold the hatch (7) on the bodywork part in the absence of the moving member (12).

2. Assembly according to claim 1, constituted by a tie (21) provided with the assembly means (24) for being secured to the hatch (7), and by a support (22) provided with the securing means (30) for being secured to the bodywork part (5), the tie and the support being provided with coupling means (37, 36) arranged in a manner such that the tie transmits to the support the forces necessary for holding the hatch in the closed position.

3. Assembly according to any previous claim, in which, with the hatch (7) being shaped to bear against an outside face of the bodywork part (5) when said hatch is in the closed position, the fastener means (21, 22) bear against a face of the body work part (5) that is opposite from its outside face.

4. Assembly according to any previous claim, wherein the fastener means are dimensioned in a manner such as to exert on the hatch (7) a force pressing it against the outside face of the bodywork part (5).

5. Assembly according to any previous claim, wherein the fastener means present an elasticity in a direction substantially normal to the bodywork part (5) in the vicinity of the opening (6), to an extent corresponding to any play that might result from expansion of the fastener means (21, 22) and possibly from expansion of the hatch (7) and/or of the bodywork part (5) and/or corresponding to creep in any of these items.

6. Assembly according to claim 2 and any previous claim, wherein the fastener means have an elasticity procured by an elastically-deformable portion of the support (22).

7. Assembly according to claim 6, in which the elastically-deformable portion of the support (22) supports the coupling means (36) for coupling to the tie (21).

8. Assembly according to any previous claim, wherein the fastener means include a ball (27, 36) coupling that enables the tie (21) to hold the hatch (7) in the opening (6) without requiring it to be in any particular angular position.

9. Assembly according to claim 8, in which the ball coupling is constituted by a spherical portion (27) on the tie (21) and by a frustoconical seat (36) on the support (22).

10. Assembly according to claim 2 combined with any previous claim, in which the support (22) and the tie (21) are provided with a guide shape enabling them to couple together.

11. Assembly according to claim 10, in which the guide shape comprises an engagement ramp (37) whose inclination is such that, during the coupling, the tie (21) moves closer to the support (22), thereby generating the force for pressing the hatch (7) against the outside face of the bodywork part.

12. Assembly according to claims 10 and 11, in which the guide shape further comprises non-return abutments for opposing uncoupling of the tie (21) from the support (22).

13. Assembly according to claim 12, in which the tie (21) is provided with bearing surfaces (29) arranged both to slide over the engagement ramp and to force past the non-return abutments (38).

14. Assembly according to any previous claims, in which the assembly means for assembling the hatch (7) to the moving member and to the fastener means comprise fastener ribs (19) suitable for co-operating with studs (17) formed on the moving member and with studs (17) formed on the fastener means.

15. An assembly of a bodywork part, a moving member constituted by a headlight washer nozzle (12), and of an assembly of a hatch (7) and fastener means (21, 22) for fastening the hatch (7) to the bodywork part according to anyone of claims 1 to 14.

## Patentansprüche

1. Anordnung aus einer Klappe (7) und aus Mitteln zum Befestigen dieser Klappe auf einem Karosserieteil, wobei die Klappe (7) eine Öffnung (6) verschließen kann, die für das Ausfahren eines beweglichen Elements in dem Karosserieteil (5) vorgesehen ist, wobei das bewegliche Element eine Spritzeinrichtung (12) einer Scheinwerfer-Wascheinrichtung aufweist und wobei die Verschlussklappe mit Mitteln zum Zusammenbau (19) mit dem beweglichen Element ausgerüstet ist, wobei sich die Klappe dank der Mittel zum Zusammenbau gemeinsam mit dem beweglichen Element zwischen einer geschlossenen Position, in der sie die Öffnung (6) verschließt, wenn sich das bewegliche Element (12) hinter der Öffnung befindet, und einer offenen Position, in der sie die Öffnung (6) freigibt, wenn das bewegliche Element aus dieser Öffnung hervorragt, wobei die Anordnung **dadurch gekennzeichnet ist, dass** die Befestigungsmittel (21, 22) Mittel zum Zusammenbau (24) aufweisen, die geeignet sind, mit den Mitteln zum Zusammenbau (19) der Klappe (7) zusammenzuwirken, um die Klappe (7) mit den Befestigungsmitteln (21, 22) fest zu verbinden, sowie Verankerungsmittel (30) auf dem Karosserieteil, um die Befestigungsmittel (21, 22) am Karosserieteil (7) fest anzubringen, wobei die Befestigungsmittel (21, 22) in der Lage sind, die Klappe (7) bei fehlendem beweglichen Element (12) an dem Karosserieteil zu halten.

2. Anordnung nach Anspruch 1, die aus einem Riegelelement (21) besteht, das die Mittel zum Zusammenbau (24) für seine Verbindung mit der Klappe (7) aufweist, sowie einer Halterung (22), die die Verankerungsmittel (30) zum festen Verbinden mit dem Karosserieteil (5) aufweist, wobei das Riegelelement und die Halterung Verbindungsmittel (27, 36) aufweisen, die so gestaltet sind, dass die zum Halten der Klappe in einer geschlossenen Position erforderlichen Kräfte über das Riegelelement auf die Halterung übertragen werden.

3. Anordnung nach einem der Ansprüche 1 und 2, in der die Klappe (7) so gestaltet ist, dass sie sich auf einer äußere Fläche des Karosserieteils (5) abstützt, wenn sie sich in einer geschlossenen Position befindet, und sich die Befestigungsmittel (21, 22) auf einer Fläche des Karosserieteils (5) abstützen, die seiner äußeren Fläche gegenüberliegt.

4. Anordnung nach einem der Ansprüche 1 bis 3, in der die Befestigungsmittel derart dimensioniert sind, dass sie auf die Klappe (7) und die äußere Fläche des Karosserieteils (5) eine Andrückkraft ausüben.

5. Anordnung nach einem der Ansprüche 1 bis 4, in der die Befestigungsmittel in einer im Wesentlichen zum Karosserieteil (5) neben der Öffnung (6) senkrechten Richtung eine Elastizität in einem Maße aufweisen, das dem Spiel entspricht, das von den Ausdehnungen der Befestigungsmittel (21, 22) und eventuell der Klappe (7) und/oder des Karosserieteils und/oder der Verformung dieser Elemente herrührt.

6. Anordnung nach Anspruch 2 in Verbindung mit einem der Ansprüche 1 bis 5, in der die Befestigungsmittel eine Elastizität aufweisen, die von einem elastischen, deformierbaren Teil der Halterung (22) bereitgestellt wird.

7. Anordnung nach Anspruch 6, in der der elastische, deformierbare Teil der Halterung (22) die Mittel (36) zum Verbinden mit dem Riegelelement (21) haltert.

8. Anordnung nach einem der Ansprüche 1 bis 7, in der die Befestigungsmittel eine gelenkige Verbindung (27, 23) umfassen, die es dem Riegelelement (21) gestattet, die Klappe (7) ohne Richtungsvorgabe in der Öffnung zu halten.

9. Anordnung nach Anspruch 8, in der die gelenkige Verbindung aus einem kugelförmigen Abschnitt (27) am Riegelelement (21) und einem kegelstumpfartigen Sitz (36) auf der Halterung (22) besteht.

10. Anordnung nach Anspruch 2 in Verbindung mit einem der Ansprüche 1 bis 9, in der die Halterung (22) und das Riegelelement (21) eine Form aufweisen, mittels derer sie beim Verbinden geführt werden.

11. Anordnung nach Anspruch 10, in der die Form der Führung eine Eingriffsrampe (37) umfasst, deren Neigung so ausgelegt ist, dass sich das Riegelelement (21) beim Verbinden der Halterung (22) nähert, wodurch die Andrückkraft der Klappe (7) auf die äußere Fläche des Karosserieteils hervorgerufen wird.

12. Anordnung nach einem der Ansprüche 10 und 11, in der die Form der Führung Rücklaufsperren (38) umfasst, die einem Lösen der Verbindung des Riegelelements von der Halterung entgegenwirken.

13. Anordnung nach Anspruch 12, in der das Riegelelement (21) Ausleger (29) aufweist, die einerseits auf der Eingriffsrampe (37) gleiten können und andererseits durch Krafteinwirkung die Rücklaufsperren (38) passieren können.

14. Anordnung nach einem der Ansprüche 1 bis 13, in der die Mittel zum Zusammenbauen der Klappe mit dem beweglichen Element und den Befestigungsmitteln Befestigungsrippen (19) umfassen, die mit auf dem beweglichen Element gebildeten Ansätzen (17) und mit auf den Befestigungsmitteln gebildeten Ansätzen (24) zusammenwirken können.

15. Anordnung aus einem Karosserieteil und aus einem beweglichen Element, das eine Spritzeinrichtung (12) einer Scheinwerfer-Wascheinrichtung aufweist, und aus einer Anordnung einer Klappe (7) und Mitteln (21, 22) zur Befestigung dieser Klappe auf dem Karosserieteil nach einem der Ansprüche 1 bis 14.
